# EUROPEAN PATENT APPLICATION

(11) **EP 2 781 566 A1**
(43) Date of publication of application: **24.09.2014**
(21) Application number: 13160661.8
(22) Date of filing: 22.03.2013
(51) Int. Cl.: C09D 133/00

(54) **Non-edible coating comprising food material**

(71) Applicant: Anne, Valerie, 92000 Nanterre (FR)
(72) Inventor: Anne, Valerie, 92000 Nanterre (FR)
(74) Representative: Icosa

(57) **Abstract**

The present invention relates to non-edible coatings comprising a filmogen agent and at least one food material selected from liquid, solid, fluid or gel food materials such as for example water, citrus fruit, red berries, raspberry, strawberry, blackberry, kiwifruit, tomato, vanilla, pomegranate, beet, carrot, leek, potato, pimento, saffron, curry, cinnamon, vanilla, fish eggs, lavender, rice, sugar, herbes de provence, tomato concentrate, tomato extract, ketchup, honey, blackberry marmalade, strawberry marmalade, cocoa, chocolate, carrot puree, grenadine, soy sauce, veggies sauce, wine, liquors, curacao, vinegar, tomato juice, carrot juice, raspberry juice, water, milk, rose water or mixture thereof. The method for manufacturing the same is also disclosed.

## Description

### FIELD OF INVENTION

This invention relates to the field of coatings, especially to a non-edible coating comprising at least one food material and at least one filmogen agent.

### BACKGROUND OF INVENTION

Most of the coatings manufactured worldwide comprise pigments in order to provide a color to the film formed after application. Painters often mix their compositions in order to increase the number of available colors. Therefore there is always a need to expand the palette of the previously known colors in coatings: this invention provides a coating which includes pigments which are food materials, the result of which being a coating providing additional sensorially perceptible enhancement in terms of color, texture or even scent.

One other object of the invention is to provide a coating with a shelf-life of at least 6 months, preferably at least one year, more preferably at least three years, comprising a food material. As food materials have a limited shelf-life, their uses in coatings have been neglected in favor of synthetic pigments. Surprisingly, the Applicant observed that the filmogen agent of the present invention, in combination with the food material, provides to the coating a shelf-life of more than 6 months preferably at least one year, more preferably at least three years.

The use of filmogen agents such as acrylic binders often leads to residual smell. Moreover during application and until the disappearance of the odors, the users may complain with symptoms such as headache. An advantage of the present invention lies in the fact that aromatic food materials may cover the smell of filmogen agents.

As this invention focuses on coatings containing user-friendly components like food materials, the coating of the present invention may be used for craft activities. The coatings of this invention actually involves three of the five traditional senses, i.e. sight, smell and touch, and may be helpful for developing children's skills.

As using harmful products in craft activities for children is never wished, this invention focuses on coatings containing user friendly components. Often, the volatile organic components used as solvents in coatings are recognized harmful to the environment or to specialized workers. Moreover coatings compositions comprise various additives and binders in order to give an attractive rendering regardless of the environmental issues. Another issue intended to be solved by this invention is therefore to manufacture products using user-friendly components limiting the environmental impact. The solution provided by this invention is to use food material in combination with filmogen agents and only natural additives, solvents or excipients, such as for instance water.

Some coatings including natural components are described in the prior art : for example, EP 1 352 937 discloses a natural paint where volatilization and release of organic solvents is controlled; and comprises a vegetable drying oil such as for example linseed oil, china wood oil, sesame oil, sunflower oil, etc. and waxes.

WO2007/141557 discloses an edible ink composition for marking foodstuffs comprising a pigment which is a food material and a food-permitted solvent.

However, none of the prior art documents describe a coating comprising or consisting of only food materials and a filmogen agent. The coating of the present invention does not provide an edible coating for applications on foodstuffs; but a coating with new natural components providing new features to the coatings such as new scents, new textures and new colors.

### SUMMARY

The present invention relates to a coating, comprising a filmogen agent and at least one food material, said coating being non-edible.

In an embodiment, said filmogen agent comprises single or blended acrylic resin(s), or a vinyl acetate aqueous dispersion, or mixture thereof.

In an embodiment, said food material comprises liquid or solid or fluid or gel food material, or mixture thereof.

In an embodiment, said solid food material is selected from herbs, spices, cereals, seeds, fruits, vegetables, or mixture thereof.

In an embodiment, said liquid food material is selected from naturally liquid food material, or from liquid food material obtained from solid food material such as wine, sauce, juice, alcoholic beverage, or mixture thereof.

In an embodiment, said fluid or gel food material is selected from syrup, marmalade, jelly, extract, concentrate, puree, or mixture thereof.

In an embodiment, said food material is selected from water, citrus fruit, red berries, raspberry, strawberry, blackberry, kiwifruit, tomato, vanilla, pomegranate, beet, carrot, leek, potato, spinach, pimento, saffron, curry, cinnamon, vanilla, fish eggs, lavender, rice, sugar, herbes de provence, tomato concentrate, tomato extract, ketchup, honey, blackberry marmalade, strawberry marmalade, cocoa, chocolate, carrot puree, grenadine, soy sauce, veggies sauce, wine, liquors, vinegar, curacao, tomato juice, carrot juice, raspberry juice, water, milk, rose water or mixture thereof.

In an embodiment, the coating comprises aqueous solvents.

In an embodiment, the coating comprises additives.

In an embodiment, the coating is used for providing texture to a substrate, or protecting a substrate, or coloring a substrate, said substrate being an article or a surface.

In an embodiment, the coating is used for craft activities wherein the use of the coating develops various skills and involves many senses including sight and/or smell and/or touch.

In an embodiment, said substrate is partially or totally coated with the coating of the present invention.

In an embodiment, food material is used as pigment for coatings.

In an embodiment, the process for manufacturing a coating comprising the step of:
a) providing a food material,
b) optionally, pulverizing the food material,
c) optionally, diluting and/or filtrating the food material,
d) optionally, mixing the composition of step a) or step b) or step c) with additives,
e) mixing the previous composition of step a) or step c) or step c) or step d) with the filmogen agent; and homogenizing the composition by appropriate mixing such as for example from gentle to shear mixing.

In an embodiment, the process for manufacturing a coating comprising the step of:
a) providing a food material,
b) optionally, pulverizing the food material,
c) optionally, diluting and/or filtrating the food material,
d) mixing the additives with the filmogen agent,
e) adding gradually to the solution achieved after step d) the solution achieved after step a) or step b) or step c); and homogenizing the composition by appropriate mixing such as for example from gentle to shear mixing.

### DETAILED DESCRIPTION

This invention relates to a coating comprising at least one filmogen agent and at least one pigment, wherein the pigment is a food material; said coating being non-edible.

In a first embodiment, the food material is a liquid, a solid, a fluid or a gel food material or a mixture thereof.

Advantageously, the solid food material may be selected from herbs, spices, cereals, seeds, fruits, vegetables, starchy foods, etc., or mixture thereof.

In an embodiment, the solid food material may be selected from fruits such as citrus fruit, red berries, raspberry, strawberry, blackberry, kiwifruit, tomato, vanilla, pomegranate, blackcurrant, redcurrant, gooseberry, eggplant, guava, lucuma, chili pepper, grape, cranberry, blueberry, pumpkin, gourd, cucumber, melon, orange, lemon, lime, grapefruit, boysenberry, pineapple, fig, mulberry, hedge apple, avocado, apple, rose hip, etc., or mixture thereof.

In an embodiment, the solid food material may be selected from vegetables such as beet, broccoli, cauliflower, artichokes, capers, endive, lettuce, mustard, cress, garlic, ginger, celery, rhubarb, cardoon, Chinese celery, asparagus, bamboo shoots, beans, parsnip, radish, rutabaga, turnip, burdock, onion, shallot, carrot, leek, potato, spinach, etc., or mixture thereof.

In an embodiment, the solid food material may be selected from spices such as pimento, saffron, curry, chili powder, harissa, paprika, black pepper, etc., or mixture thereof.

In an embodiment, the solid food material may be selected from cocoa, chocolate, cinnamon, vanilla, fish eggs, lavender, rice, basmati, sugar, herbes de provence, etc., or mixture thereof.

In one embodiment, the chocolate is selected from chocolate commercialized under the brand name "Chocolate 1848" commercialized by CHOCOLAT POULAIN.

In one embodiment, the cocoa is selected from cocoa commercialized under the brand name "Van Houten" commercialized by VAN HOUTEN.

In one embodiment, the solid food material has a viscosity above 1Pa.s, or 2 Pa.s, or 5Pa.s, or 10Pa.s, or 20Pa.s.

Solid pigments may also have the function of fillers in the coating of the invention and may provide specific texture to the coated film obtained after application of the coating of the present invention.

Advantageously, the fluid or gel food material may be selected from honey, syrup, fruit syrup, vegetable syrup, marmalade, fruit marmalade, vegetable marmalade, jelly, fruit jelly, vegetable jelly, extract, fruit extract, vegetable extract, concentrate, fruit concentrate, vegetable concentrate, puree, fruit puree, vegetable puree, etc. or mixture thereof.

In an embodiment, the fluid or gel food material may be selected from tomato concentrate, tomato extract, carrot puree, honey, ketchup, grenadine, blackberry marmalade, strawberry marmalade, etc. or mixture thereof.

In one embodiment, the fluid or gel food material has a viscosity between 0.001 and 250 1 Pa.s, or between 0.1 and 100 Pa.s, or between 1 and 20 Pa.s.

Fluid or gel pigments may also have the function of fillers in the coating of the invention and may provide specific texture to the coated film obtained after application of the coating of the present invention.

Advantageously, the liquid food material may be selected from naturally liquid food material, or from liquid food material obtained from solid food material such as alcoholic beverage, sauce, fruit juice, vegetable juice etc.; or mixture thereof.

In an embodiment, the liquid food material may be selected from sauces, such as soy sauce, veggies sauce, etc., or mixture thereof.

In an embodiment, the liquid food material may be selected from alcoholic beverages, such as wine, liquors, curacao, etc. or mixture thereof.

In an embodiment, the liquid food material may be selected from juices, such as tomato juice, carrot juice, raspberry juice, etc. or mixture thereof.

In an embodiment, the liquid food material may be selected from water, milk, vinegar, rose water, etc., or mixture thereof.

In one embodiment, the liquid food material has a viscosity below 1Pa.s, or 2 Pa.s, or 5Pa.s, or 10Pa.s, or 20Pa.s.

Liquid pigments may also have the function of fillers in the coating of the invention and may provide specific texture to the coated film obtained after application of the coating of the present invention.

In one embodiment, the food material of the present invention is selected from vegetal source.

In one embodiment, the food material of the present invention is selected from animal source.

In an embodiment, the food material used as a component of the coating of the present invention is a raw food material.

In an embodiment, the food material used as a component of the coating of the present invention is a cooked or processed food material.

In one embodiment, the coating of the present invention comprises at least one filmogen agent.

In one embodiment, the filmogen agent comprises acrylic binder such as single or blended acrylic resin or mixture thereof.

In one embodiment, the acrylic resin may be any acrylic resin known by a person skilled in the art such as for example Amsterdam acrylic medium glossy 012 commercialized by ROYAL TALENS, or liquid mediums commercialized by LEFRANC & BOURGEOIS, or acrylic binder commercialized by TOURDE, or fluid mediums commercialized by LIQUITEX.

In another embodiment, the filmogen agent comprises a vinyl acetate aqueous dispersion, such as for example caparol binder® commercialized by CAPAROL.

In an embodiment, the filmogen agent comprises mixture of various filmogen agents such as, for example, those described hereabove.

In one embodiment, the filmogen agent is compatible with the food material. In the present invention, compatible refers to the ability for the filmogen agent to provide, to the coating comprising food materials, a shelf-life of at least 6 months, preferably at least one year, more preferably at least three years, even more preferably of at least ten years.

In one embodiment, the food material is insoluble or immiscible with respect to the filmogen agent.

For instance, citrus fruit, raspberry, strawberry, blackberry, kiwifruit, tomato, vanilla, pomegranate, beet, carrot, leek, potato, pimento, saffron, curry, cinnamon, vanilla, fish eggs, lavender, rice, sugar, herbes de provence, tomato concentrate, tomato extract, honey, blackberry marmalade, or strawberry marmalade are insoluble with respect to the filmogen agent.

In another embodiment, the food material is soluble or miscible with respect to the filmogen agent.

For instance, cocoa, chocolate, carrot puree, grenadine, soy sauce, veggies sauce, ketchup, wine, liquors, vinegar, curacao, sugar, tomato juice, carrot juice, raspberry juice, water, milk, or rose water are soluble with respect to the filmogen agent.

In one embodiment, the coating of the present invention comprises at least one solvent. In one embodiment, the solvent of the coating is an aqueous solvent.

In one embodiment, the solvent of the coating is water or a liquid food material or mixture thereof.

In one embodiment in which liquid food material is implemented, there is no solvent added.

In one embodiment in which liquid food material is implemented, a solvent is added.

In one embodiment, the coating comprises additives.

In one embodiment, the additives may be one or more plasticizers, preferably natural plasticizers.

In one embodiment, the additives may be one or more waxes and/or surfactants, preferably natural waxes or surfactants.

In one embodiment, the additives may be one or more preservatives, preferably natural preservatives.

In one embodiment, the additives may be one or more excipients, preferably natural excipients.

In an embodiment, the coating may comprise various excipients know by a person skilled in the art, such as for example water.

In an embodiment, the proportion of food material in the coating ranges from 0.1 to 95% w/w, preferably from 0.5 to 90% w/w more preferably from 1 to 85% w/w.

In an embodiment, the proportion of acrylic resin in the coating ranges from 0 to 98%w/w, preferably from 1 to 95% w/w.

In an embodiment, the proportion of vinyl acetate aqueous dispersion in the coating ranges from 0 to 98%w/w, preferably from 1 to 95% w/w.

In an embodiment, the proportion of solvent in the coating ranges from 0 to 60% w/w, preferably from 0 to 55% w/w, more preferably from 1 to 50% w/w.

In an embodiment in which solvent is implemented, the ratio between the proportion of vinyl acetate aqueous dispersion to the proportion of solvent ranges from 0 to 10, preferably from 0.5 to 5; more preferably the ratio is approximately equal to 0, 0.5, 1, 2 or 3.

In an embodiment in which acrylic resin is implemented, the ratio between the proportion of vinyl acetate aqueous dispersion to the proportion of acrylic resin ranges from 0 to 10, preferably from 0.2 to 5; more preferably the ration is approximately equal to 0, 0.2, 0.25, 0.33, 0.5, 1 or 2.

In one embodiment, the coating does not comprise solvent.

In one embodiment, the coating does not comprise vinyl acetate aqueous dispersion.

In one embodiment, the coating does not comprise binder, such as acrylic binder.

In one embodiment, the coating does not comprise resin, such as acrylic resin.

In an embodiment, the coating includes user-friendly materials.

In an embodiment, the coating does not include synthetic pigment.

In one embodiment, the coating does not include vegetable oil.

In one embodiment, the coating does not include linseed oil, china wood oil, sesame oil, sunflower oil, cannabis oil, perilla oil, peanut oil, haze wax, candelilla wax, carnauba wax, rice bran.

In an embodiment, the substrate is non-edible.

In an embodiment, the substrate is not a foodstuff.

In an embodiment, the coating does not include synthetic pigment.

In an embodiment, the coating does not include synthetic aroma.

In an embodiment, the food material may be colored or having a natural high color strength.

In one embodiment, the food material is selected from a foodstuff which presents a scent and/or a texture and/or a pigmentation. The use and/or the addition of natural pigments to the coating potentiate the brilliance of the coating.

In an embodiment, the food material is edible.

In an embodiment, the food material may be out-of-shelf-life recycling wasted food material.

In an embodiment, the food material is edible.

In an embodiment, the food materials have various consistencies, such as for example a puree, a mousse, a marmalade, a gel, etc.

In one embodiment, new textures for coated film from available degradable food material are achieved. Three textures may be achieved:
- coarse texture with coarsely ground material,
- medium texture with pulverization of the material,
- fine texture with fine pulverisation, dilution and filtration obtaining a limpid solution.

In one embodiment, the use of the coating involves many senses: sight, smell, touch. The coating offers indeed pleasant texture, scent and color.

In one embodiment, the coating may comprise natural aroma.

In one embodiment, the coating may comprise natural pigment.

In one embodiment, the coating provided pleasant odor upon drying.

In one embodiment, the coated film obtained from the coating of the present invention involves many senses: sight, smell, touch. The coated film offers indeed pleasant texture, scent and color.

In one embodiment, the coated film obtained from the coating is washable, resistant, insulating and provides good mechanical strength.

In one embodiment, the coated film ensures high durability to the coating.

In one embodiment, the coated film possesses very good adhesives properties.

In one embodiment, the coated film is water-resistant.

In one embodiment, the hiding power of the coated film may be modified according to the food material and/or to the amount of solvent and/or binder and/or additive implemented.

In one embodiment, the coating and/or the coated film from the coating is non-edible. In one embodiment, the coating consists of natural components.

This invention also relates to the applications of the coating.

In one embodiment, the coating may be partially or totally applied onto a substrate, which may be a surface or an article.

In one embodiment, the substrate is clean, dry and not fat.

In one embodiment, the substrate is biodegradable or not biodegradable.

In one embodiment, the coating may be deposited on all supports: buildings, furniture, textiles, fabrics or articles, such as for instance a pillar, a wall, canvas, a floor, a plate, a metal, a glass, a fusuma, a door, a sofa, a bed, a table, floor covering such as a tatami and a carpet, preferably a wall, canvas, a plate, fabrics, textiles, metal, wood, glass, paint, cement, Plexiglas...

In an embodiment, the coating may be implemented into indoor and/or outdoor applications.

In one embodiment, the coating may be applied on the surface of various articles for protecting, garnishing, ornamenting, coloring or providing texture to an article or a surface.

This invention also relates to a process for manufacturing the coating.

In one embodiment, the process for manufacturing the coating comprises the following steps:
a) providing a food material,
b) optionally, pulverizing the food material,
c) optionally, diluting and/or filtrating the food material with solvent,
d) optionally, mixing the composition of step a) or step b) or step c) with additive
e) mixing the previous composition of step a) or step b) or step c) or step d) with the filmogen agent; and homogenizing the composition by appropriate mixing such as for example from gentle to shear mixing.

In this embodiment, the process may comprise step a) and e), or step a) and b) and e), or step a) and c) and e), or step a) and d) and e), or step a) and b) and c) and e) or step a) and c) and d) and e), or step a) and b) and d) and e), or step a) and b) c) and d) and e).

In a preferred embodiment, the process for manufacturing the coating comprises the following steps:
a) providing a food material,
b) optionally, pulverizing the food material,
c) optionally, diluting and/or filtrating the food material with solvent,
d) mixing the additive with the filmogen agent,
e) adding gradually to the solution achieved after step d), the solution achieved after step a) or step b) or step c); and homogenizing the composition by appropriate mixing such as for example from gentle to shear mixing.

In this embodiment, the process may comprise step a), d) and e), or step a), b), d) and e), or step a), c), d) and e), or step a) b), c), d) and e).

In one embodiment, the pulverisation step b) comprises the steps of crushing and/or grinding and/or pounding the solid food material in order to obtain a fine powder. This step will provide a coarse or medium texture to the coated film.

In one embodiment, the food material is a powder having a particle size of less than 5 millimeters.

In a preferred embodiment, the powder has a particle size of 0.1- 5000 micrometers, preferably of 1-1000 micrometers.

In one embodiment, the cocoa powder has a particle size of 0.1-3000 micrometers, preferably 1-500 micrometers, more preferably 1-300 micrometers, even more preferably 5-100 micrometers.

In one embodiment, the filtration step c) removes particles larger than 2 mm, preferably 1.5 mm, more preferably 1mm, even more preferably 0.8 mm. This embodiment will provide a fine texture to the coated film.

In one embodiment, only a portion of the solution obtained after filtration is used in the coating composition.

In one embodiment, step c) allows obtaining various shades according to the way dilution and/or filtration is performed.

In one embodiment, the steps a) and/or step b) and/or step c) may be repeated, and the different food materials are mixed together before step d) and/or step e): so various colors and/or textures may be achieved by combining food materials and/or solvents.

In one embodiment, the steps a) and/or step b) and/or step c) are repeated before step d) and/or step e) with only solid food material.

In one embodiment, the steps a) and/or step b) and/or step c) are repeated before step d) and/or step e) with only liquid food material.

In one embodiment, the steps a) and/or step b) and/or step c) are repeated before step d) and/or step e) with liquid and solid food material

In one embodiment, the coating must rest after manufacture for at least 10 minutes, preferably 1 hour, more preferably 2 hours, even more preferably 5 hours before application.

In one embodiment, the coating may be applied onto a substrate directly after manufacture.

In one embodiment, the coating may have monolayer or multilayer applications.

In one embodiment, a thick layer of coated film, allowing the creation of specific texture, may be achieved.

In one embodiment, the coating composition has a viscosity that allows the composition to be applied into a substrate in a controlled manner.

In an embodiment, the coating may be applied by brush, spatula, sponge, knife, roller or any other means that a person skilled in the art would find suitable.

In one embodiment, the coating is implemented into varnish like nail varnish.

In one embodiment, the coating should be keep away from frost and used above 10°C.

*While various embodiments have been chosen to illustrate the invention, it will be understood by those skilled in the art that some changes and modifications can be made therein without departing from the scope of the invention as defined in the appended claims.*

### DEFINITIONS

In the present invention, the following terms have the following meanings:
- **"Pigment":** refers to the component which contributes to the color and the structure of the coating. Pigment relates to the part imparting the color whereas the filler refers to the part imparting toughness, and texture. In the present invention the terms pigment or filler are commutable as food material may provide on the same time color and texture to the coating. In this invention, pigment or dye are also used interchangeably
- **"Filmogen agent":** refers to the film-forming component. In the present invention, the filmogen agent comprises acrylic binder such as single or blended acrylic resin, or a vinyl acetate aqueous dispersion, such as for example caparol binder®, or mixture thereof.
- **"Diluent or Solvent":** refers to a volatile compound that dilutes the composition leading to liquid and practicable coating. During and after the application, the solvent evaporates and the coating solidifies.
- **"Additive":** refers to miscellaneous compounds which may modify the properties of the coating.
- **"User-friendly":** refers in the present invention to compounds which contain at most 30g/l, preferably 20g/l, more preferably at most 15g/l of volatile organic compounds.
- **"Coating":** refers to a composition in liquid form with various viscosities. Therefore in the present invention a coating is a film-forming composition which, after or upon application onto a substrate, is converted into a film by mere evaporation of the solvents contained therein. Coatings may include components such as for example binders, solvents, pigments and additive. Coatings of the invention may be paints, varnishes, lacquers, finishes, stains, primers, inks, dyes, coil coatings, surface coatings, adhesives, clearcoats, and resins. In the present invention, coating refers to a filmogen composition, whereas coated film refers to the result of the application of the coating according to the present invention.
- **"Food material":** refers in the present invention to any components intended to be eaten at an instant of its lifecycle.
- **"w/w":** means in weight to the total weight of the coating.

### EXAMPLES

The present invention is further illustrated by the following examples.

### Example 1:

A coating based on kiwifruit consisting of:
- kiwifruit: 20g
- acrylic resin: 10g

### Methods

First a kiwifruit is pulverized i.e. crushed and/or grinded and/or pounded. 20 grams of the obtained composition (juice, pulp and seeds) are selected. Then said composition is mixed with 10 grams of acrylic resin. The composition is homogenized with first a gentle mixing and then with a shear mixing. The coating thus prepared is then stored until application.

### Example 2:

A coating based on chocolate (such as for example the cocoa commercialized under the brand name "Chocolate 1848") consisting of:
- chocolate: 3g
- milk: 10g
- acrylic resin: 30g

### Methods

First chocolate is pulverized i.e. crushed and/or grinded and/r pounded. 3 grams of the obtained powder are selected. The cocoa powder is then mixed with 10 grams of milk used as solvent. Said composition is mixed with 30 grams of acrylic resin. The composition is homogenized with first a gentle mixing and then with a shear mixing. The coating thus prepared is then stored until application.

### Example 3:

A coating based on curry consisting of:
- curry: 3 g
- water: 10g
- Caparol ®: 10g
- acrylic resin: 20g

### Methods

First 3 grams of curry powder is provided. The powder is then mixed with 10 grams of water. Said composition is filtrate to remove particles larger than 1mm.

10 grams of Caparol® and 20 grams of acrylic resin are mixed together in order to provide one filmogen agent. Said filmogen agent is mixed with the previous mixture of water and curry. The composition is homogenized with first a gentle mixing and then with a shear mixing. The coating thus prepared is then stored until application.

### Example 4:

Coatings according to embodiments of the present invention have been achieved with the following compositions:

| **Food material** | | | | | | | | | | |
|---|---|---|---|---|---|---|---|---|---|---|
| type | rice | rice | rice | rice | rice | rice | rice | rice | rice | rice |
| amount (mL or g) | 5 | 5 | 5 | 5 | 5 | 5 | 10 | 10 | 10 | 10 |

| **Solvent** | | | | | | | | | | |
|---|---|---|---|---|---|---|---|---|---|---|
| water (g) | 0 | 10 | 0 | 0 | 0 | 0 | 0 | 0 | 0 | 0 |
| milk (g) | 0 | 0 | 0 | 0 | 0 | 0 | 0 | 0 | 0 | 0 |

| **Filmogen agent** | | | | | | | | | | |
|---|---|---|---|---|---|---|---|---|---|---|
| acrylic resin (g) | 30 | 30 | 0 | 10 | 20 | 0 | 0 | 0 | 0 | 20 |
| caparol® (g) | 0 | 0 | 10 | 0 | 0 | 20 | 15 | 20 | 10 | 10 |

| **Food material** | | | | | |
|---|---|---|---|---|---|
| type | tomato concentrate | tomato concentrate | tomato concentrate | tomato concentrate | tomato concentrate |
| amount (mL or g) | 10 | 30 | 10 | 10 | 10 |

| **Solvent** | | | | | |
|---|---|---|---|---|---|
| water (g) | 0 | 0 | 0 | 0 | 0 |
| milk (g) | 0 | 0 | 0 | 0 | 0 |

| **Filmogen agent** | | | | | |
|---|---|---|---|---|---|
| acrylic resin (g) | 30 | 0 | 20 | 0 | 10 |
| caparol® (g) | 0 | 10 | 10 | 20 | 0 |

| **Food material** | | | | | | |
|---|---|---|---|---|---|---|
| type | tomato concentrate | tomato extract | tomato extract | tomato extract | tomato extract | tomato extract |
| amount (mL or g) | 10 | 10 | 10 | 10 | 10 | 10 |

| **Solvent** | | | | | | |
|---|---|---|---|---|---|---|
| water (g) | 0 | 0 | 0 | 0 | 0 | 0 |
| milk (g) | 0 | 0 | 0 | 0 | 0 | 0 |

| **Filmogen agent** | | | | | | |
|---|---|---|---|---|---|---|
| acrylic resin (g) | 20 | 30 | 10 | 10 | 20 | 30 |
| caparol® (g) | 0 | 0 | 0 | 0 | 0 | 0 |

| **Food material** | | | | | | |
|---|---|---|---|---|---|---|
| type | tomato extract | tomato extract | tomato extract | tomato juice | tomato juice | tomato juice |
| amount (mL or g) | 100 | 20 | 20 | 30 | 30 | 10 |

| **Solvent** | | | | | | |
|---|---|---|---|---|---|---|
| water (g) | 0 | 0 | 0 | 0 | 0 | 0 |
| milk (g) | 0 | 0 | 0 | 0 | 0 | 0 |

| **Filmogen agent** | | | | | | |
|---|---|---|---|---|---|---|
| acrylic resin (g) | 20 | 30 | 10 | 0 | 20 | 0 |
| caparol® (g) | 0 | 0 | 0 | 10 | 10 | 10 |

| **Food material** | | | | | | |
|---|---|---|---|---|---|---|
| type | curacao | curacao | curacao | curacao | curacao | curacao |
| amount (mL or g) | 10 | 10 | 10 | 10 | 30 | 30 |

| **Solvent** | | | | | | |
|---|---|---|---|---|---|---|
| water (g) | 0 | 0 | 0 | 0 | 0 | 0 |
| milk (g) | 0 | 0 | 0 | 0 | 0 | 0 |

| **Filmogen agent** | | | | | | |
|---|---|---|---|---|---|---|
| acrylic resin (g) | 0 | 20 | 0 | 10 | 20 | 0 |
| caparol® (g) | 20 | 0 | 10 | 0 | 0 | 20 |

| **Food material** | | | | | | | | | | |
|---|---|---|---|---|---|---|---|---|---|---|
| type | wine | wine | wine | wine | wine | wine | wine | wine | wine | wine |
| amount (mL or g) | 20 | 20 | 20 | 20 | 20 | 20 | 30 | 30 | 30 | 30 |

| **Solvent** | | | | | | | | | | |
|---|---|---|---|---|---|---|---|---|---|---|
| water (g) | 0 | 0 | 0 | 0 | 0 | 0 | 0 | 0 | 0 | 0 |
| milk (g) | 0 | 0 | 0 | 0 | 0 | 0 | 0 | 0 | 0 | 0 |

| **Filmogen agent** | | | | | | | | | | |
|---|---|---|---|---|---|---|---|---|---|---|
| acrylic resin (g) | 30 | 20 | 0 | 0 | 0 | 40 | 100 | 80 | 60 | 40 |
| caparol® (g) | 10 | 0 | 20 | 40 | 20 | 0 | 20 | 20 | 20 | 20 |

| **Food material** | | | | | | |
|---|---|---|---|---|---|---|
| type | kiwifruit | kiwifruit | kiwifruit | kiwifruit | chocolate 1848 | chocolate 1848 |
| amount (mL or g) | 10 | 10 | 20 | 20 | 6 | 6 |

| **Solvent** | | | | | | |
|---|---|---|---|---|---|---|
| water (g) | 0 | 0 | 0 | 0 | 0 | 0 |
| milk (g) | 0 | 0 | 0 | 0 | 10 | 30 |

| **Filmogen agent** | | | | | | |
|---|---|---|---|---|---|---|
| acrylic resin (g) | 10 | 0 | 0 | 10 | 0 | 30 |
| caparol® (g) | 0 | 10 | 10 | 0 | 30 | 0 |

| **Food material** | | | | | |
|---|---|---|---|---|---|
| type | chocolate 1848 | chocolate 1848 | chocolate 1848 | chocolate 1848 | chocolate 1848 |
| amount (mL or g) | 6 | 3 | 3 | 3 | 3 |

| **Solvent** | | | | | |
|---|---|---|---|---|---|
| water (g) | 0 | 0 | 0 | 4 | 0 |
| milk (g) | 10 | 10 | 0 | 0 | 0 |

| **Filmogen agent** | | | | | |
|---|---|---|---|---|---|
| acrylic resin (g) | 30 | 0 | 20 | 20 | 20 |
| caparol® (g) | 0 | 30 | 0 | 0 | 0 |

| **Food material** | | | | | | |
|---|---|---|---|---|---|---|
| type | chocolate 1848 | chocolate 1848 | red berry | red berry | red berry | red berry |
| amount (mL or g) | 3 | 3 | 10 | 10 | 10 | 10 |

| **Solvent** | | | | | | |
|---|---|---|---|---|---|---|
| water (g) | 10 | 0 | 0 | 0 | 0 | 0 |
| milk (g) | 0 | 10 | 0 | 0 | 0 | 0 |

| **Filmogen agent** | | | | | | |
|---|---|---|---|---|---|---|
| acrylic resin (g) | 10 | 30 | 10 | 0 | 20 | 0 |
| caparol® (g) | 0 | 0 | 0 | 10 | 0 | 20 |

| **Food material** | | | | | | | | | |
|---|---|---|---|---|---|---|---|---|---|
| type | cocoa | cocoa | cocoa | cocoa | cocoa | cocoa | cocoa | cocoa | cocoa |
| amount (mL or g) | 1.5 | 3 | 5 | 6 | 7 | 8 | 9 | 10 | 10 |

| **Solvent** | | | | | | | | | |
|---|---|---|---|---|---|---|---|---|---|
| water (g) | 10 | 10 | 0 | 10 | 10 | 10 | 10 | 10 | 10 |

| milk (g) | 0 | 0 | 0 | 0 | 0 | 0 | 0 | 0 | 0 |
|---|---|---|---|---|---|---|---|---|---|
| **Filmogen agent** | | 20 | | | | | | | |
| acrylic resin (g) | 20 | 10 | 20 | 20 | 20 | 20 | 20 | 15 | 20 |
| caparol® (g) | 10 | 20 | 10 | 10 | 10 | 10 | 10 | 5 | 10 |

| **Food material** | | | | | | | | |
|---|---|---|---|---|---|---|---|---|
| type | cocoa | curry | curry | curry | curry | curry | curry | curry |
| amount (mL or g) | 15 | 20 | 3 | 3 | 3 | 10 | 15 | 5 |

| **Solvent** | | | | | | | | |
|---|---|---|---|---|---|---|---|---|
| water (g) | 10 | 10 | 10 | 10 | 10 | 10 | 10 | 10 |
| milk (g) | 0 | 0 | 0 | 0 | 0 | 0 | 0 | 0 |

| **Filmogen agent** | | | | | | | | |
|---|---|---|---|---|---|---|---|---|
| acrylic resin (g) | 20 | 20 | 20 | 20 | 20 | 20 | 20 | 20 |
| caparol® (g) | 10 | 10 | 10 | 10 | 10 | 10 | 10 | 10 |

| **Food material** | | | | | | |
|---|---|---|---|---|---|---|
| type | cinnamon | cinnamon | cinnamon | cinnamon | pimento | pimento |
| amount (mL or g) | 3 | 6 | 6 | 10 | 5 | 3 |

| **Solvent** | | | | | | |
|---|---|---|---|---|---|---|
| water (g) | 10 | 20 | 10 | 10 | 10 | 10 |
| milk (g) | 0 | 0 | 0 | 0 | 0 | 0 |

| **Filmogen agent** | | | | | | |
|---|---|---|---|---|---|---|
| acrylic resin (g) | 20 | 20 | 20 | 20 | 20 | 20 |
| caparol® (g) | 10 | 10 | 10 | 10 | 10 | 10 |

| **Food material** | | | | | |
|---|---|---|---|---|---|
| type | herbes de provence | herbes de provence | herbes de provence | herbes de provence | herbes de provence |
| amount (mL or g) | 2 | 2 | 2 | 2 | 2 |

| **Solvent** | | | | | |
|---|---|---|---|---|---|
| water (g) | 0 | 10 | 0 | 0 | 0 |
| milk (g) | 0 | 0 | 0 | 0 | 0 |

| **Filmogen agent** | | | | | |
|---|---|---|---|---|---|
| acrylic resin (g) | 10 | 30 | 30 | 0 | 0 |
| caparol® (g) | 0 | 0 | 0 | 10 | 20 |

| **Food material** | | | | | |
|---|---|---|---|---|---|
| type | herbes de provence | herbes de provence | herbes de provence | herbes de provence | herbes de provence |
| amount (mL or g) | 5 | 5 | 5 | 5 | 5 |

| **Solvent** | | | | | |
|---|---|---|---|---|---|
| water (g) | 0 | 10 | 0 | 0 | 0 |
| milk (g) | 0 | 0 | 0 | 0 | 0 |

| **Filmogen agent** | | | | | |
|---|---|---|---|---|---|
| acrylic resin (g) | 0 | 20 | 20 | 20 | 10 |
| caparol® (g) | 10 | 0 | 0 | 0 | 0 |

| **Food material** | | | | | | | |
|---|---|---|---|---|---|---|---|
| type | carrot puree | carrot puree | carrot puree | carrot puree | carrot puree | carrot puree | carrot puree |
| amount (mL or g) | 50 | 50 | 50 | 40 | 40 | 30 | 30 |

| **Solvent** | | | | | | | |
|---|---|---|---|---|---|---|---|
| water (g) | 0 | 0 | 0 | 0 | 0 | 0 | 0 |
| milk (g) | 0 | 0 | 0 | 0 | 0 | 0 | 0 |

| **Filmogen agent** | | | | | | | |
|---|---|---|---|---|---|---|---|
| acrylic resin (g) | 30 | 10 | 20 | 10 | 0 | 0 | 10 |
| caparol® (g) | 0 | 0 | 0 | 0 | 20 | 20 | 0 |

| **Food material** | | | | | | | |
|---|---|---|---|---|---|---|---|
| type | carrot puree | carrot puree | carrot puree | carrot puree | carrot juice | carrot juice | milk |
| amount (mL or g) | 20 | 10 | 10 | 10 | 20 | 20 | / |

| **Solvent** | | | | | | | |
|---|---|---|---|---|---|---|---|
| water (g) | 0 | 0 | 0 | 0 | 0 | 0 | 0 |
| milk (g) | 0 | 0 | 0 | 0 | 0 | 0 | 20 |

| **Filmogen agent** | | | | | | | |
|---|---|---|---|---|---|---|---|
| acrylic resin (g) | 10 | 0 | 0 | 10 | 10 | 0 | 20 |
| caparol® (g) | 0 | 20 | 10 | 0 | 10 | 10 | 0 |

| **Food material** | | | | | | | | |
|---|---|---|---|---|---|---|---|---|
| type | sugar | sugar | sugar | sugar | honey | honey | honey | honey |
| amount (mL or g) | 6 | 6 | 20 | 30 | 5 | 5 | 5 | 10 |

| **Solvent** | | | | | | | | |
|---|---|---|---|---|---|---|---|---|
| water (g) | 0 | 0 | 0 | 0 | 0 | 0 | 0 | 0 |
| milk (g) | 0 | 0 | 0 | 0 | 0 | 0 | 0 | 0 |

| **Filmogen agent** | | | | | | | | |
|---|---|---|---|---|---|---|---|---|
| acrylic resin (g) | 0 | 0 | 0 | 0 | 10 | 20 | 0 | 20 |
| caparol® (g) | 20 | 20 | 20 | 20 | 0 | 0 | 20 | 0 |

| **Food material** | | | | | | | | |
|---|---|---|---|---|---|---|---|---|
| type | vanilla | vanilla | vanilla | vanilla | grenadine | grenadine | grenadine | grenadine |
| amount (mL or g) | 2 | 2 | 2 | 2 | 40 | 40 | 40 | 20 |

| **Solvent** | | | | | | | | |
|---|---|---|---|---|---|---|---|---|
| water (g) | 0 | 0 | 0 | 0 | 0 | 10 | 0 | 0 |
| milk (g) | 0 | 0 | 0 | 0 | 0 | 0 | 0 | 0 |

| **Filmogen agent** | | | | | | | | |
|---|---|---|---|---|---|---|---|---|
| acrylic resin (g) | 20 | 0 | 10 | 0 | 30 | 30 | 20 | 30 |
| caparol® (g) | 0 | 20 | 0 | 10 | 0 | 0 | 10 | 0 |

| **Food material** | | | | | | |
|---|---|---|---|---|---|---|
| type | raspberry juice | raspberry juice | raspberry juice | raspberry juice | raspberry | raspberry |
| amount (mL or g) | 10 | 10 | 10 | 10 | 10 | 10 |

| **Solvent** | | | | | | |
|---|---|---|---|---|---|---|
| water (g) | 0 | 0 | 0 | 0 | 0 | 0 |
| milk (g) | 0 | 0 | 0 | 0 | 0 | 0 |

| **Filmogen agent** | | | | | | |
|---|---|---|---|---|---|---|
| acrylic resin (g) | 20 | 10 | 0 | 0 | 0 | 0 |
| caparol® (g) | 0 | 0 | 10 | 20 | 20 | 10 |

| **Food material** | | | | | |
|---|---|---|---|---|---|
| type | vegetable soup | blackberry jam | strawberry jam | strawberry jam | strawberry jam |
| amount (mL or g) | 20 | 10 | 5 | 10 | 5 |

| **Solvent** | | | | | |
|---|---|---|---|---|---|
| water (g) | 0 | 10 | 0 | 0 | 0 |
| milk (g) | 0 | 0 | 0 | 0 | 0 |

| **Filmogen agent** | | | | | |
|---|---|---|---|---|---|
| acrylic resin (g) | 10 | 20 | 0 | 0 | 10 |
| caparol® (g) | 0 | 10 | 20 | 10 | 0 |

## Claims

1. A coating, comprising a filmogen agent and at least one food material, said coating being non-edible.

2. The coating according to claim **1**, wherein said filmogen agent comprises single or blended acrylic resin(s), or a vinyl acetate aqueous dispersion, or mixture thereof.

3. The coating according to claim **1** or claim **2**, wherein said food material comprises liquid or solid or fluid or gel food material, or mixture thereof.

4. The coating according to claim **3**, wherein said solid food material is selected from herbs, spices, cereals, seeds, fruits, vegetables, or mixture thereof.

5. The coating according to claim **3**, wherein said liquid food material is selected from naturally liquid food material, or from liquid food material obtained from solid food material such as wine, sauce, juice, alcoholic beverage, or mixture thereof.

6. The coating according to claim **3**, wherein said fluid or gel food material is selected from syrup, marmalade, jelly, extract, concentrate, puree, or mixture thereof.

7. The coating according to anyone of claims **1** to **6**, wherein said food material is selected from water, citrus fruit, red berries, raspberry, strawberry, blackberry, kiwifruit, tomato, vanilla, pomegranate, beet, carrot, leek, potato, spinach, pimento, saffron, curry, cinnamon, vanilla, fish eggs, lavender, rice, sugar, herbes de provence, tomato concentrate, tomato extract, ketchup, honey, blackberry marmalade, strawberry marmalade, cocoa, chocolate, carrot puree, grenadine, soy sauce, veggies sauce, wine, liquors, vinegar, curacao, tomato juice, carrot juice, raspberry juice, water, milk, rose water or mixture thereof.

8. The coating according to anyone of claims **1** to **7**, wherein the coating comprises aqueous solvents.

9. The coating according to anyone of claims **1** to **8**, wherein the coating comprises additives.

10. Use of the coating according to anyone of claims **1** to **9**, for providing texture to a substrate, or protecting a substrate, or coloring a substrate, said substrate being an article or a surface.

11. Use of the coating according to anyone of claims **1** to **9**, for craft activities wherein the use of the coating develops various skills and involves many senses including sight and/or smell and/or touch.

12. Surfaces or articles partially or totally coated with the coating according to anyone of claims **1** to **9**.

13. Use of a food material as a pigment for coating.

14. Process for manufacturing a coating comprising the step of:
a) providing a food material,
b) optionally, pulverizing the food material,
c) optionally, diluting and/or filtrating the food material,
d) optionally, mixing the composition of step a) or step b) or step c) with additives,
e) mixing the previous composition of step a) or step c) or step c) or step d) with the filmogen agent; and homogenizing the composition by appropriate mixing such as for example from gentle to shear mixing.

15. Process for manufacturing a coating comprising the step of:
a) providing a food material,
b) optionally, pulverizing the food material,
c) optionally, diluting and/or filtrating the food material,
d) mixing the additives with the filmogen agent,
e) adding gradually to the solution achieved after step d) the solution achieved after step a) or step b) or step c); and homogenizing the composition by appropriate mixing such as for example from gentle to shear mixing.
